# EUROPÄISCHE PATENTSCHRIFT

(11) **EP 1 878 592 B1**
(45) Veröffentlichungstag und Bekanntmachung des Hinweises auf die Patenterteilung: **28.04.2010**
(21) Anmeldenummer: 07107790.3
(22) Anmeldetag: 09.05.2007
(51) Int. Cl.: B60C 19/08, B29D 30/52

(54) **Verfahren zur Herstellung eines Fahrzeugluftreifens**
Method for manufacturing a vehicle pneumatic tyre
Procédé destiné à la fabrication d'un pneu de véhicule

(30) Priorität: 14.07.2006 DE 102006032817
(43) Veröffentlichungstag der Anmeldung: 16.01.2008
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-A- 1 657 050
- EP-A1- 0 681 931
- EP-A1- 0 747 243
- EP-A1- 0 838 353
- EP-A2- 1 175 992
- WO-A-99/29523
- WO-A-2005/108048
- AU-B2- 533 633
- GB-A- 544 757
- US-B1- 6 474 382

## Beschreibung

Die Erfindung betrifft ein Verfahren zur Herstellung eines Fahrzeugluftreifens mit einem einteiligen oder einem eine Laufstreifencap und eine Laufstreifenbase aufweisenden Laufstreifen, wobei der Laufstreifen bzw. die Laufstreifencap aus einer elektrisch nicht leitfähigen Kautschukmischung hergestellt wird, in welche zumindest ein Insert aus einer elektrisch leitfähigen Kautschukmischung eingebracht wird, welches zwischen der Außenseite des Laufstreifens und einer elektrisch leitfähigen Kautschukmischung im Unterbau bzw. der Laufstreifencap und der aus einer elektrisch leitfähigen Kautschukmischung bestehenden Laufstreifenbase eine elektrisch leitfähige Verbindung herstellt.

Da sich Fahrzeuge während des Fahrbetriebes elektrisch aufladen, ist für eine ausreichende Ableitung der elektrostatischen Ladungen Sorge zu tragen. Die mit der Fahrbahn in Kontakt stehenden Aufstandsflächen der Reifen müssen daher ausreichend leitfähig sein. Ist dies nicht der Fall, können unangenehme Entladungsvorgänge auftreten. Insbesondere bei kieselsäurehaltigen Laufstreifen, die den Reifen an sich gute Fahreigenschaften, wie einen geringen Rollwiderstand und gute Nass-Rutsch-Eigenschaften verleihen, ist deren niedrige elektrische Leitfähigkeit eine mischungsbedingte und nachteilige Eigenschaft.

Ein Verfahren der eingangs genannten Art ist aus der EP 0 747 243 A1 bekannt. Beim Aufbau des Rohreifens wird der abgelängte Rohlaufstreifen auf die Reifenaufbautrommel aufgelegt, seine Enden werden stirnseitig zusammengefügt. Zwischen den Endflächen des zu einem Ring geformten Laufstreifens ist eine Schicht aus einem gut elektrisch leitfähigen Material eingebracht, welches eine elektrisch leitfähige Verbindung zwischen der Außenseite des Laufstreifens und der leitfähigen Laufstreifenbase herstellt. Auf den Laufstreifen wird ferner in Umfangsrichtung umlaufend ein 0,1 mm bis 0,5 mm dünner Streifen aus elektrisch leitfähigem Gummi derart aufgelegt, dass bei dernachfolgenden Vulkanisation des Reifens in einer Heizform ein Vorsprung in der Form eine Nut im Laufstreifen ausbildet, die mit dem Streifen ausgekleidet ist, welcher auf diese Weise in Kontakt zur Laufstreifenbase kommt.

Ein weiteres Verfahren ist aus der US 6,834,693 B1 bekannt. Der Laufstreifen wird mit einer Extrusionsvorrichtung erstellt, welche einen den kompletten Laufstreifen erzeugenden Hauptextruder und einen mit diesem zusammenarbeitenden Mikroextruder aufweist, welcher eine elektrisch leitfähige Kautschukmischung direkt in einen Abschnitt der unvulkanisierten und heißen Kautschukmischung, welche aus dem Hauptextruder kommt, einfügt.

Aus der US 6,951,233 B1 ist ein Verfahren zur Herstellung eines Laufstreifens aus einer Laufstreifencap und einer Laufstreifenbase bekannt, welche beide aus einer elektrisch nicht leitfähigen Kautschukmischung hergestellt werden. Die Laufstreifenbase und die Laufstreifencap werden jeweils separat mit einem Hauptextruder erstellt, wobei in jede dieser Mischungen durch Coextrusion jeweils eine elektrisch leitfähige Kautschukmischung eingefügt wird. Bei diesen beiden aus dem Stand der Technik bekannten Verfahren erfolgt daher ein Einfügen elektrisch leitfähiger Inserts in den Laufstreifen bzw. in die Laufstreifencap und -base während der Extrusion des Laufstreifens bzw. des jeweiligen Laufstreifenteils. Diese bekannten Verfahren sind aufwändig und lassen sich bei Laufstreifen, die durch Spulen eines Materialstreifens aus einer Kautschukmischung hergestellt werden, nicht anwenden.

Der Erfindung liegt die Aufgabe zu Grunde, ein Verfahren zur Verfügung zu stellen, mit dem auf einfache Weise in einen elektrisch nicht leitfähigen Laufstreifen oder Laufstreifenteil, welcher insbesondere durch Spulen eines Materialstreifens hergestellt wird, zumindest einen Einsatz aus einer elektrisch leitfähigen Kautschukmischung eingebracht werden kann.

Gelöst wird die gestellte Aufgabe erfindungsgemäß dadurch, dass im rohen Laufstreifen bzw. in der rohen Laufstreifencap zumindest eine in Umfangsrichtung verlaufende, bis zur leitfähigen Kautschukmischung reichende Nut erstellt wird, in welche anschließend das Insert unter Ausfüllen der Nut eingebracht wird.

Die Erfindung zeigt daher eine sehr einfache Möglichkeit auf, einen oder mehrere Innerts aus einer elektrisch leitfähigen Kautschukmischung im bereits aufgebrachten aber noch rohen Laufstreifen einzubringen. Der Laufstreifen kann dabei auch aus einem Materialstreifen durch Spulen hergestellt sein.

Besonders einfach und passgenau lässt sich in die Nut ein vorgeformter, dem Nutquerschnitt angepasster Profilstreifen einbringen. Dieser ist ferner bevorzugt vorvernetzt und daher vorteilhafterweise formstabiler als ein roher Profilstreifen.

Alternativ dazu kann in die Nut auch ein extrudierter Mischungsstrang, beispielsweise mittels des Base-Extruders, eingebracht werden.

Eine weitere einfache Maßnahme zum Einbringen der leitfähigen Kautschukmischung, wenn diese entsprechend fließfähig ist, besteht darin, dass diese in die Nut eingegossen oder eingespritzt wird.

Die Nut kann mit unterschiedlichen Querschnitten erstellt werden, sodass sie beispielsweise einen U-, V-, oder W-förmigen aber auch einen trapezförmigen, rechteckigen oder dreieckigen Querschnitt aufweist.

Auf besonders einfache Weise lässt sich die Nut durch Schneiden im Laufstreifen erstellen.

Über den Umfang des Laufstreifens können auch mehrere Nutabschnitte, in axiale und in Umfangsrichtung gegeneinander versetzt, angebracht werden. Diese Maßnahme erlaubt es, auf die spätere Profilierung des Laufstreifens Rücksicht zu nehmen, sodass der erforderliche Kontakt des leitfähigen Gummis mit der Straßenoberfläche gewährleistet ist.

Eine Maßnahme zur Anpassung an das spätere Profil besteht auch in der Wahl des Verlaufs der Nut bzw. der Nutabschnitte. Die Nut bzw. die Nutabschnitte kann bzw. können daher beispielsweise in der Draufsicht geradlinig, wellenförmig oder zickzackförmig verlaufen.

Der bzw. die in die Nut bzw. die Nutabschnitte eingesetzte(n) Profilstreifen kann bzw. können in axialer oder in radialer Richtung aus mehreren Schichten insbesondere unterschiedlicher Farben aufgebaut sein. Dies eröffnet die Möglichkeit, den Profilstreifen als Treadwearindikator zu nutzen. In den Profilstreifen kann ferner auch zumindest eine Antenne eingelegt werden.

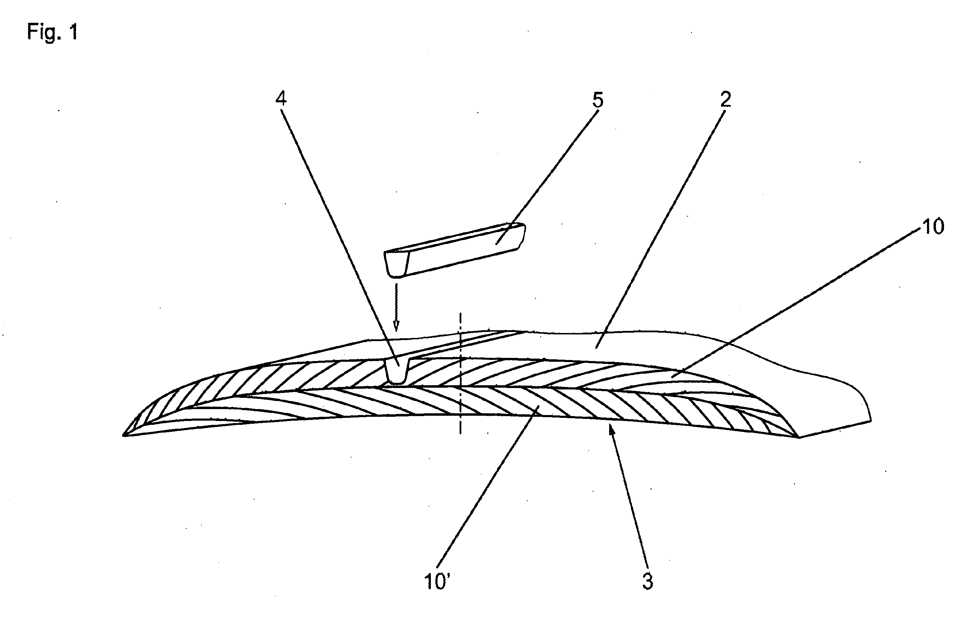

Weitere Merkmale, Vorteile und Einzelheiten der Erfindung werden anhand der Zeichnung, die schematisch ein Ausführungsbeispiel darstellt, näher beschrieben. Dabei zeigt die einzige Figur, Fig. 1, eine Ansicht eines Abschnittes eines Laufstreifens mit einer Ausführungsvariante der Erfindung.

Der in Fig. 1 gezeigte Laufstreifen besteht aus einer Laufstreifencap 2 und einer Laufstreifenbase 3, die unmittelbar auf das nicht dargestellte Gürtelpaket oder auf eine dieses abdeckende Bandage eines Fahrzeugluftreifens aufgebracht wird. Die Laufstreifencap 2 wird unmittelbar auf die Laufstreifenbase 3 aufgebracht und wird beim Vulkanisieren des Reifens profiliert. Die Außenseite der Laufstreifencap 2 tritt beim fertig vulkanisierten Reifen bei dessen Verwendung mit dem Untergrund in Kontakt. Bei der dargestellten Ausführungsvariante ist die Laufstreifenbase 3 aus einer der üblichen und bekannten Basemischungen erstellt, enthält als Füllstoff Ruß und ist somit elektrisch leitfähig. Die Laufstreifencap 2 besteht aus einer sogenannten Silikamischung - einer Kautschukmischung, welche als Füllstoff Kieselsäure (Silika) und keinen oder höchstens einen sehr geringen Anteil an Ruß enthält. Die Laufstreifencap 2 ist daher elektrisch nicht leitfähig. Bei der dargestellten Ausführung sind ferner die Laufstreifencap 2 und die Laufstreifenbase 3 aus zumindest einem Materialstreifen 10, 10' aus einer Kautschukmischung erstellt, welcher jeweils durch spiraliges Spulen über den Reifenumfang aufgebracht wird. Abweichend von der gezeigten Ausführung können sowohl die Laufstreifencap 2 als auch die Laufstreifenbase 3 extrudierte ganze Profile sein, die um den Umfang aufgelegt werden.

Nach dem Aufbringen der Laufstreifenbase 3 und der Laufstreifencap 2 wird im noch unvulkanisierten Zustand des Reifens in der Laufstreifencap 2 zumindest eine umlaufende Nut 4 angebracht, beispielsweise eingeschnitten, die bis zur Laufstreifenbase 3 reicht. Die Nut 4 kann beispielsweise einen U-, V-, W-förmigen, oder einen dreieckigen, trapezförmigen, oder rechteckigen Querschnitt aufweisen. Ihre Breite beträgt zwischen 1 mm und 5 mm. In diese Nut 4 wird bei der in Fig. 1 gezeigten Ausführungsvariante ein Profilstreifen 5 eingesetzt, dessen Querschnitt dem Querschnitt der Nut 4 angepasst ist. Der Profilstreifen 5 besteht aus einer Kautschukmischung, die elektrisch leitfähig ist und daher Ruß als Füllstoff enthält. Die Position der Nut 4 und somit des Profilstreifens 5 wird entsprechend der vorgesehenen Profilierung gewählt, um beim fertig vulkanisierten Reifen über den Reifenumfang einen Kontakt des Profilstreifens 5 zur Straßenoberfläche zu gewährleisten.

Anstelle einer einzigen umlaufenden Nut 4 können mehrere Nuten im rohen Laufstreifen erstellt werden, welche in Axial- und in Umfangsrichtung gegeneinander versetzt sind und in welche Profilstreifenabschnitte eingebracht werden. Die Nut bzw. Nuten kann bzw. können geradlinig oder in Zickzack- oder Wellenform erstellt werden.

Der Profilstreifen 5 kann aus einer vorvernetzten Kautschukmischung bestehen, die zwar noch klebrig und daher konfektionsfähig ist, aber formstabiler und damit passgenauer ist als eine unvulkanisierte Mischung.

Der Profilstreifen 5 kann auch mittels eines Extruders, beispielsweise mittels des Base-Extruders aufgebracht werden. Der Streifen kann ferner ein- oder mehrfarbig ausgeführt sein und in radialer oder axialer Richtung aus mehreren Schichten unterschiedlicher Farben bzw. Mischungen bestehen. Diese Maßnahme gestattet es, den Profilstreifen als Treadwearindikatior (TWI) zu nutzen. Im Profilstreifen kann ferner zumindest eine Antenne positioniert sein. Bei einem axialen Versatz von Profilstreifenabschnitten können diese diagonal zur Umfangsrichtung verlaufen. Diesbezüglich kann auf die Ausbildung des Laufstreifenprofils entsprechend Rücksicht genommen werden.

Es ist ferner möglich, die Nut 4 bzw. die Nuten oder Nutabschnitte mit einer elektrisch leitfähigen Kautschukmischung, die entsprechend fließfähig ist, auszugießen oder auszuspritzen.

Der Laufstreifen kann auch als Monolaufstreifen (als ganzes Teil oder gespult) ausgeführt sein, dabei reicht der Profilstreifen bis zum Unterbau, insbesondere bis zur leitfähigen Aufpressmischung der Gürtellagen bzw. der Bandage.

## Patentansprüche

1. Verfahren zur Herstellung eines Fahrzeugluftreifens mit einem einteiligen oder einem eine Laufstreifencap (2) und eine Laufstreifenbase (3) aufweisenden Laufstreifen, wobei der Laufstreifen bzw. die Laufstreifencap (2) aus einer elektrisch nicht leitfähigen Kautschukmischung hergestellt wird, in welche zumindest ein Insert aus einer elektrisch leitfähigen Kautschukmischung eingebracht wird, welches zwischen der Außenseite des Laufstreifens und einer elektrisch leitfähigen Kautschukmischung im Unterbau bzw. der Laufstreifencap (2) und der aus einer elektrisch leitfähigen Kautschukmischung bestehenden Laufstreifenbase (3) eine elektrisch leitfähige Verbindung herstellt,
**dadurch gekennzeichnet,**
**dass** im rohen Laufstreifen bzw. in der rohen Laufstreifencap (2) zumindest eine in Umfangsrichtung verlaufende, bis zur leitfähigen Kautschukmischung reichende Nut (4) erstellt wird, in welche anschließend das Insert unter Ausfüllen der Nut (4) eingebracht wird.

2. Verfahren nach Anspruch 1, **dadurch gekennzeichnet, dass** in die Nut (4) ein vorgeformter, dem Nutquerschnitt angepasster Profilstreifen (5) eingebracht wird.

3. Verfahren nach Anspruch 2, **dadurch gekennzeichnet, dass** der Profilstreifen (5) vorvernetzt ist.

4. Verfahren nach Anspruch 1, **dadurch gekennzeichnet, dass** in die Nut (4) ein extrudierter Mischungsstrang eingebracht wird.

5. Verfahren nach Anspruch 1, **dadurch gekennzeichnet, dass** die Nut (4) mit einer elektrisch leitfähigen Kautschukmischung, die entsprechend fließfähig ist, ausgegossen oder ausgespritzt wird.

6. Verfahren nach einem der Ansprüche 1 bis 5, **dadurch gekennzeichnet, dass** die Nut (4) mit einem U-, V-, oder W-förmigen, trapezförmigen, rechteckigen oder dreieckigen Querschnitt erstellt wird.

7. Verfahren nach einem der Ansprüche 1 bis 6, **dadurch gekennzeichnet, dass** die Nut (4) in den Laufstreifen geschnitten wird.

8. Verfahren nach einem der Ansprüche 1 bis 7, **dadurch gekennzeichnet, dass** über den Umfang des Laufstreifens mehrere Nutabschnitte, in axialer und in Umfangsrichtung gegeneinander versetzt, angebracht werden.

9. Verfahren nach einem der Ansprüche 1 bis 8, **dadurch gekennzeichnet, dass** die Nut (4) bzw. die Nutabschnitte in Draufsicht geradlinig, wellenförmig oder zickzackförmig verläuft bzw. verlaufen.

10. Verfahren nach einem der Ansprüche 1 bis 9, **dadurch gekennzeichnet, dass** der bzw. die Profilstreifen (5) in radialer oder axialer Richtung aus mehreren Schichten, insbesondere unterschiedlicher Farbe, besteht bzw. bestehen.

11. Verfahren nach einem der Ansprüche 1 bis 10, **dadurch gekennzeichnet, dass** im Profilstreifen (5) zumindest eine Antenne eingelegt ist.

## Claims

1. Method for manufacturing a pneumatic vehicle tyre having a one-part tread or a tread which comprises a tread cap (2) and a tread base (3), the tread or the tread cap (2) being produced from an electrically nonconductive rubber mixture, incorporated in which is at least one insert of an electrically conductive rubber mixture, which establishes an electrically conductive connection between the outer side of the tread and an electrically conductive rubber mixture in the substructure or between the tread cap (2) and the tread base (3), consisting of an electrically conductive rubber mixture, **characterized in that** at least one groove (4) running in the circumferential direction and reaching as far as the conductive rubber mixture is created in the unvulcanized tread or in the unvulcanized tread cap (2), into which groove (4) the insert is subsequently introduced and fills the groove.

2. Method according to Claim 1, **characterized in that** a preformed profile strip (5) adapted to the cross section of the groove (4) is introduced into said groove.

3. Method according to Claim 2, **characterized in that** the profile strip (5) is pre-crosslinked.

4. Method according to Claim 1, **characterized in that** a strand of extruded mixture is introduced into the groove (4).

5. Method according to Claim 1, **characterized in that** the groove (4) is filled with a cast or injection-moulded electrically conductive rubber mixture, which is correspondingly free-flowing.

6. Method according to one of Claims 1 to 5, **characterized in that** the groove (4) is created with a U- or V- or W-shaped, trapezoidal, rectangular or triangular cross section.

7. Method according to one of Claims 1 to 6, **characterized in that** the groove (4) is cut into the tread.

8. Method according to one of Claims 1 to 7, **characterized in that** a number of groove portions are provided over the circumference of the tread, offset with respect to one another in the axial direction and the circumferential direction.

9. Method according to one of Claims 1 to 8, **characterized in that**, in plan view, the groove (4) or the groove portions runs or run in a straight line or in a wavy or zigzag form.

10. Method according to one of Claims 1 to 9, **characterized in that** the profile strip or strips (5) is or are composed of a number of layers, in particular of different colours, in the radial or axial direction.

11. Method according to one of Claims 1 to 10, **characterized in that** at least one antenna is integrated in the profile strip (5).

## Revendications

1. Procédé de fabrication d'un bandage pneumatique pour roue de véhicule qui présente une bande de roulement d'une seule pièce ou une bande de roulement dotée d'un chapeau (2) de bande de roulement et d'une base (3) de bande de roulement,
la bande de roulement ou le chapeau (2) de bande de roulement étant réalisés en un mélange de caoutchouc électriquement non conducteur dans lequel est placée au moins une garniture en un mélange de caoutchouc électriquement conducteur qui établit une liaison électriquement conductrice entre le côté extérieur de la bande de roulement et un mélange de caoutchouc électriquement conducteur situé dans la base ou dans le chapeau (2) de la bande de roulement, d'une part, et la base (3) de bande de roulement constituée d'un mélange de caoutchouc électriquement conducteur, d'autre part,
**caractérisé en ce que**
au moins une rainure (4) qui s'étend à la périphérie, qui atteint le mélange de caoutchouc conducteur et dans laquelle la garniture est ensuite placée en remplissant la rainure (4) est formée dans la bande de roulement brute ou dans le chapeau brut (2) de la bande de roulement.

2. Procédé selon la revendication 1, **caractérisé en ce qu'**un ruban profilé (5) préformé et adapté à la section transversale de la rainure est placé dans la rainure (4).

3. Procédé selon la revendication 2, **caractérisé en ce que** le ruban profilé (5) est pré-réticulé.

4. Procédé selon la revendication 1, **caractérisé en ce qu'**un barreau extrudé de mélange est placé dans la rainure (4) .

5. Procédé selon la revendication 1, **caractérisé en ce qu'**un mélange de caoutchouc électriquement conducteur et de fluidité appropriée est versé ou injecté dans la rainure (4).

6. Procédé selon l'une des revendications 1 à 5, **caractérisé en ce que** la rainure (4) a une section transversale en forme de U, de V ou de W ou la forme d'un trapèze, d'un rectangle ou d'un triangle.

7. Procédé selon l'une des revendications 1 à 6, **caractérisé en ce que** la rainure (4) est découpée dans la bande de roulement.

8. Procédé selon l'une des revendications 1 à 7, **caractérisé en ce que** plusieurs parties de rainure sont réparties à la périphérie de la bande de roulement et décalées mutuellement dans la direction axiale et dans la direction périphérique.

9. Procédé selon l'une des revendications 1 à 8, **caractérisé en ce que** vues en plan, la rainure (4) ou les parties de rainure s'étendent en ligne droite, en ondulations ou en zigzag.

10. Procédé selon l'une des revendications 1 à 9, **caractérisé en ce que** dans la direction radiale ou la direction axiale, le ou les rubans profilés (5) sont constitués de plusieurs couches, en particulier de couleurs différentes.

11. Procédé selon l'une des revendications 1 à 10, **caractérisé en ce qu'**au moins une antenne est insérée dans le ruban profilé (5) .
